# EUROPEAN PATENT APPLICATION

(11) **EP 1 847 919 A2**
(43) Date of publication of application: **24.10.2007**
(21) Application number: 07105389.6
(22) Date of filing: 30.03.2007
(51) Int. Cl.: G06F 3/048

(54) **User interface generation**

(30) Priority: 17.04.2006 KR 20060034713
(71) Applicant: Samsung Electronics Co., Ltd., Suwon-si, Gyeonggi-Do (KR)
(72) Inventor: Kwon, Heui-jin, Gyeonggi-do (KR); Kim, Young-sun, Gyeonggi-do (KR); Lee, Jeong-yeon, Gyeonggi-do (KR); Jang, Hyun-kook, Gyeonggi-do (KR); Kim, Na-young, Gyeonggi-do (KR); Hwang, Ho-ik, Gyeonggi-do (KR)
(74) Representative: Derry, Paul Stefan

(57) **Abstract**

A display apparatus comprises: a user interface (UI) generator which generates a UI having a plurality of regions in which at least one of a plurality of menu items is displayed to select an operation; a display unit which displays the UI; a user input unit which receives a command to edit the menu items; and a controller which controls the UI generator to edit an arrangement of the menu items on the UI according to the command.

## Description

The present invention relates to user interface (UI) generation.

A display apparatus, examples of which are televisions (TV), mobile phones, personal data assistants (PDAs) and portable media players (PMPs), comprises a UI in which a menu item is displayed to select a function by a user. The UI can be realized in various types. For example, the UI may display the menu item in a lengthwise or transverse direction; in a text list; in a two-dimensional arrangement having a label for each menu item; in a circular or an elliptical shape to rotate, etc.

A user may select a desired menu item in various ways from the related art UI. Typically, a user selects a desired menu item by moving a highlight between the menu items through up and down and/or left and right buttons.

In the related art UI, the menu item to be displayed on the UI is predetermined. Thus, when the UI is displayed, the menu item is displayed regardless of a user's preference. A user may choose as many operations such as moving the highlight to select the desired menu item. Particularly, as the number of menu items increases, this problem worsens.

Also, a position of the menu item in the UI is preset and cannot be edited by a user. In this case, when the UI displays a background image set by a user together with the menu item, the background image may be covered by the menu item preset in a certain position.

When the UI provides two or more stages in selecting the menu item, a user may not be familiar with the stages and not know where the current stage is included, thereby causing inconvenience to a user.

Embodiments of the present invention overcome the above disadvantages and other disadvantages not described above.

The embodiments provide a display apparatus which comprises a user interface UI in which a menu item can be edited by a user's preference, and a method. That is, the embodiments provide a display apparatus and an image processing apparatus having a UI in which a menu item can be added, hidden or moved to other positions according to a user's preference.

The embodiments also provide a display apparatus and an image processing apparatus which comprise a UI, in which a user can edits a menu item according to his/her preference to select the menu item quickly and easily.

The embodiments also provide a display apparatus and an image processing apparatus having a UI which informs a user of a current stage of selecting a menu item to thereby select the menu item conveniently.

According to an aspect of the present invention, there is provided a display apparatus comprising: a user interface (UI) generator which generates a user interface having a plurality of regions to display at least one of a plurality of menu items thereon to select an operation; a display unit which displays the UI thereon; a user input unit which receives a user's command to edit the menu items; and a controller which controls the UI generator to edit arrangement of the menu items on the UI according to the user's command.

According to an aspect of the present invention, the plurality of regions is divided as a grid shape.

According to an aspect of the present invention, the controller controls the UI generator to hide one menu item selected by a user, among the plurality of menu items in the UI.

According to another aspect of the present invention, the controller controls the UI generator to highlight the menu item to be hidden.

According to another aspect of the present invention, the controller controls the UI generator to display region numbers on the regions, and controls the UI generator to hide a menu item corresponding to the region numbers selected by a user.

According to another aspect of the present invention, the controller controls the UI generator to add at least one menu item selected by a user among the plurality of menu items, which is not displayed in the UI, to the region selected by the user among the plurality of regions.

According to another aspect of the present invention, the controller controls the UI generator to display the plurality of menu items, which is not displayed on the UI, on the display unit, and selects the menu item among the plurality of displayed menu items to be added.

According to another aspect of the present invention, the controller controls the UI generator to highlight the region in which the menu item can be added.

According to another aspect of the present invention, the controller controls region numbers on the regions, and controls the UI generator to add the selected menu item to a region corresponding to a region number selected by the user.

According to another aspect of the present invention, the controller controls the UI generator to move the menu item selected by a user among the plurality of menu items of the UI, to a region selected by the user among the plurality of regions.

According to another aspect of the present invention, the controller controls the UI generator to highlight the menu items to be moved.

According to another aspect of the present invention, the controller controls the UI generator to display region numbers on the regions, and moves the menu item corresponding to a region number of the region numbers selected by the user.

According to another aspect of the present invention, the controller controls the UI generator to highlight the region to which the menu item can be moved.

According to another aspect of the present invention, the controller controls the UI generator to display region numbers on the regions, and controls the UI generator to move the selected menu item to a region of the region numbers selected by a user.

According to another aspect of the present invention, the UI generator generates a sub UI comprising at least one sub region in which at least one sub menu item of the menu items is displayed, and the sub region is larger than the region of the UI.

According to another aspect of the present invention, the user input unit comprises a touch screen.

According to an aspect of the present invention, there is provided an image processing apparatus comprising: a UI generator which generates a UI comprising a plurality of regions in which at least one of a plurality of menu items is displayed to select an operation; a user input unit which receives a user's command to edit the menu items; and a controller which controls the UI generator to edit arrangement of the menu items of the UI according to the command.

According to an aspect of the present invention, there is provided a method of controlling a display apparatus, comprising: generating and displaying a UI which comprises a plurality of regions in which at least one of a plurality of menu items is displayed to select an operation; receiving a command to edit the menu items; and editing arrangement of the menu items of the UI according to a user's command.

According to another aspect of the present invention, the regions are arranged as a grid.

According to another aspect of the present invention, the editing the arrangement of the menu items comprises hiding a menu item of the menu items selected by a user among the plurality of menu items of the UI.

According to another aspect of the present invention, the hiding the menu item comprises highlighting the menu items which can be hidden.

According to another aspect of the present invention, the hiding the menu item comprises displaying region numbers on the regions; and hiding the menu item corresponding to a region number of the region numbers selected by the user.

According to another aspect of the present invention, the editing the arrangement of the menu items comprises adding at least one menu item selected by a user among the plurality of menu items, which are not displayed on the UI, to a region selected by a user among the plurality of regions.

According to another aspect of the present invention, the adding the menu item comprises displaying the plurality of menu items which is not displayed in the UI; and selecting the menu item to be added among the plurality of displayed menu items.

According to another aspect of the present invention, the adding the menu item comprises highlighting the regions to which the menu item can be added.

According to another aspect of the present invention, the adding the menu item comprises displaying region numbers on the regions; and adding the selected menu item to a region corresponding to a region number of the region numbers selected by the user.

According to another aspect of the present invention, the editing the arrangement of the menu items comprises moving a menu item selected by a user among the plurality of menu items displayed on the UI to a region selected by the user among the plurality of regions.

According to another aspect of the present invention, the moving the menu item comprises highlighting the menu items to be moved.

According to another aspect of the present invention, the moving the menu item comprises displaying region numbers on the regions; and moving the menu item corresponding to the region number of the region numbers selected by the user.

According to another aspect of the present invention, the moving the menu item comprises highlighting the region to which the menu item is moved.

According to another aspect of the present invention, the moving the menu item comprises displaying region numbers on the regions, and moving the selected menu item to a region corresponding to the region number of the region numbers selected by the user.

According to another aspect of the present invention, the method further comprises: generating and displaying a sub UI which comprises at least one sub region in which at least one sub menu item of the menu items is displayed, wherein the at least sub region is larger than the regions of the UI.

The above and/or other aspects of the present invention will become apparent and more readily appreciated from the following description of the exemplary embodiments, taken in conjunction with the accompanying drawings of which:
Figure 1 is a block diagram of an embodiment of a display apparatus according to the present invention;
Figures 2A and 2B illustrate a UI of the display apparatus the present invention;
Figures 3A to 3C illustrate another UI of the display apparatus;
Figures 4A to 4E illustrate an omission, an addition and a movement of a menu item;
Figures 5 to 10 are flowcharts of the display apparatus; and
Figures 11A and 11B illustrate another embodiment of a display apparatus according to the present invention.

In the accompanying drawings, like reference numerals refer to like elements throughout.

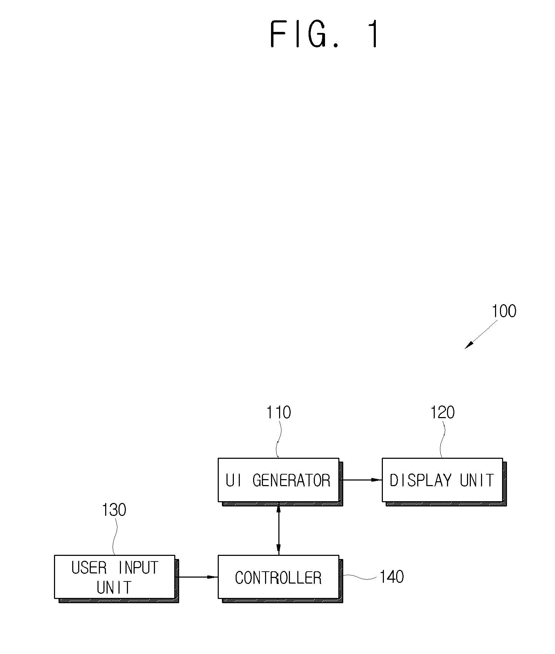

Figure 1 is a block diagram of a display apparatus 100. As shown therein, the display apparatus 100 comprises a user interface (UI) which is displayed on a display unit 120. For example, the display apparatus 100 may be realized as a mobile device such as a mobile phone, a PDA, and a PMP. Alternatively, the display apparatus 100 may comprise a TV

As shown therein, the display apparatus 100 comprises a UI generator 110, a display unit 120, a user input unit 130 and a controller 140. The UI generator 110 generates a UI which comprises at least one of a plurality of menu items to select an operation of the display apparatus 100. The display unit 120 displays the UI which is generated by the UI generator 110. The display unit 120 may comprise a liquid crystal display (LCD) to display the UI thereon. The user input unit 130 receives a command from a user to edit the menu item. The user input unit 130 may comprise a plurality of buttons to receive a command from a user.

The controller 140 controls overall operations of the display apparatus 100. The controller 140 controls the UI generator 110 to edit the arrangement of the menu items according to a user's command. The editing of the arrangement of the menu items comprises an omission, an addition and a movement of the menu items. The movement of the menu items may comprise an addition of the hidden menu item when the omission and addition of the menu items is performed consecutively.

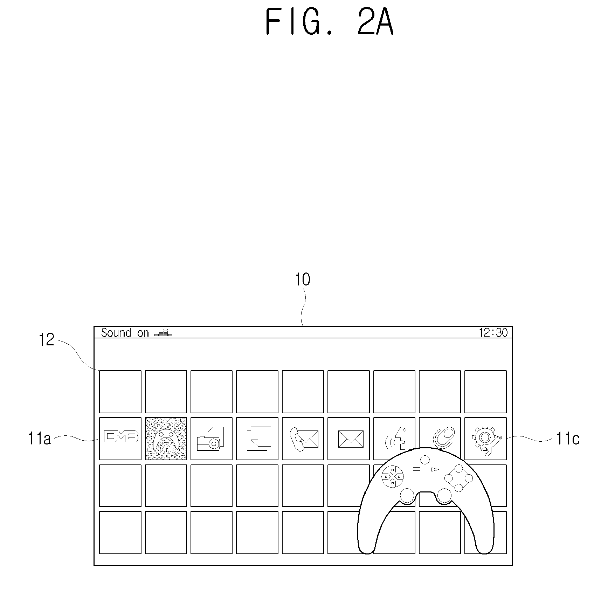

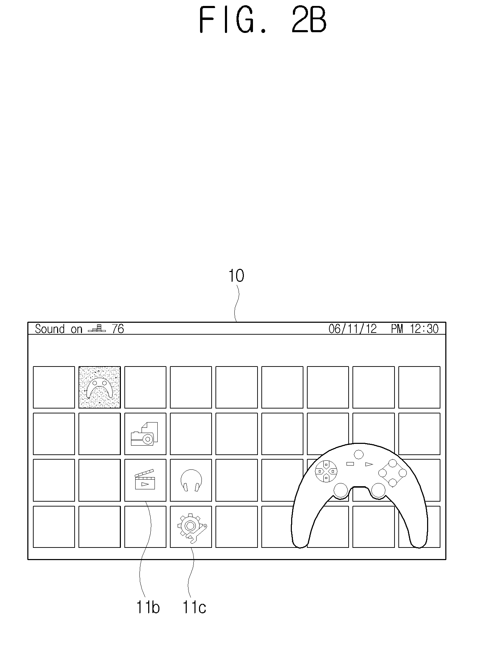

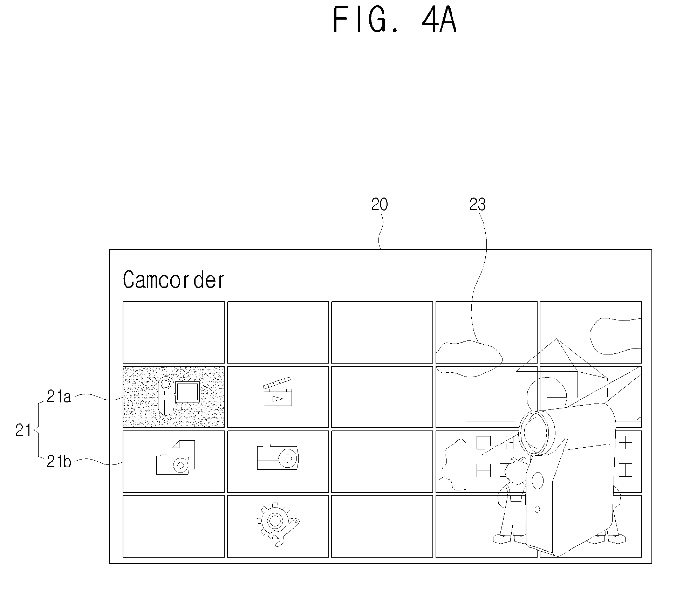

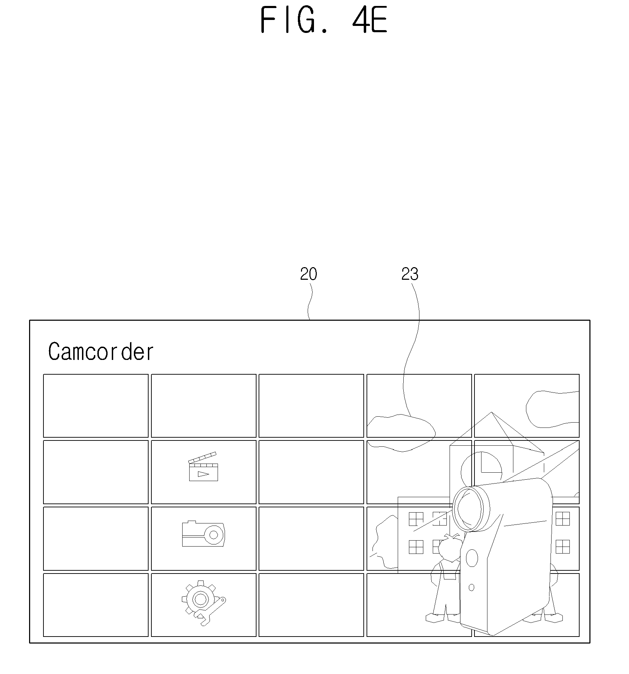

Figures 2A and 2B illustrate the UI. As shown therein, a UI 10 comprises a plurality of regions 12 in which a plurality of menu items 11 is displayed. The respective menu items 11 are shaped in an icon to select the operation of the display apparatus 100. The UI 10 comprises the plurality of regions 12 which are divided into a grid shape. The respective menu items 11 are disposed in one of the plurality of regions 12. Each of the menu items 11 has a rectangular shape. Each of the menu items 11 has a predetermined size not to overlap each other when they are arranged in two or more neighboring regions. Each of the menu items 11 displays an image indicating a operation of the display apparatus 100. The operation of the display apparatus 100 comprises DMB, game, camcorder, text, e-mail, etc. The UI 10 is displayed by a user's setting. The UI 10 may further comprise a background image 23 (referred to in Figure 4A) which is displayed as a background of the plurality of menu items 11.

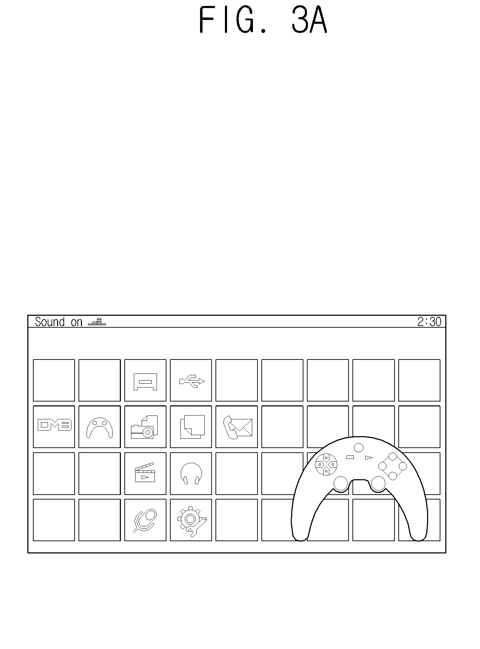

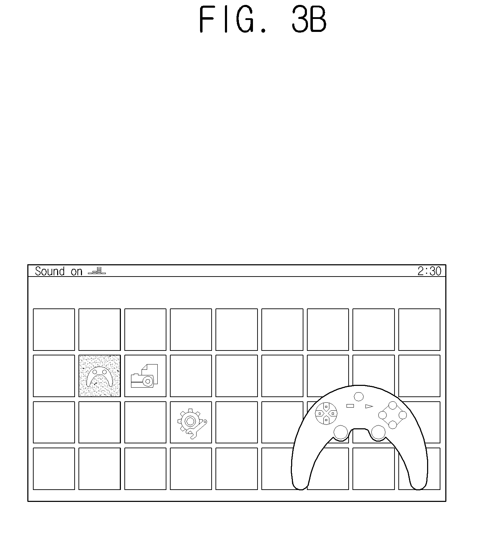

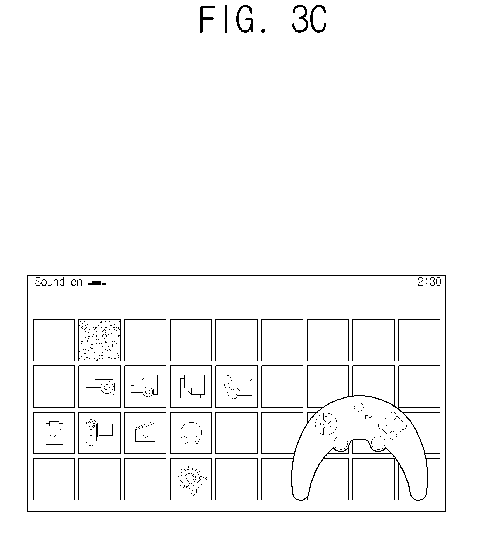

The UI 10 in Figure 2A is displayed initially when a user selects a menu setting. The plurality of menu items 11 is disposed in a horizontal direction in the UI 10 in Figure 2A. The plurality of menu items 11 may comprise a main menu, i.e., the highest menu. The controller 140 controls the UI generator 110 according to a user's input, to hide one of the plurality of menu items 11 displayed in the UI 10, add a menu item to the UI 10 or move one of the a menu items 11 displayed on the region 12 of the UI 10 to another region 12 . Referring to Figures 2A and 2B, a menu item 11a displayed on the UI 10 in Figure 2A may be hidden from the UI 10 in Figure 2B. A menu item 11b, which is not displayed in the UI 10 in Figure 2A, is added to the UI 10 in Figure 2B. Also, a menu item 11c disposed in the right end of the UI 10 in Figure 2A is moved to the bottom end of the UI 10 in Figure 2B. Figures 3A to 3C illustrate various examples of the UI 10 in which the menu items 11 are disposed according to a user's preference.

With the omission of the menu item 11 which is not frequently used, a user may select the menu items 11 quickly and easily. With the addition of the menu item to the main menu which is frequently used by a user, a user may select the menu item more quickly and easily. When the background image 23 preset by a user is displayed in the UI 10, the menu items 11 are disposed in a region 12 which does not cover the background image 23, thereby meeting a user's demand (refer to Figures 4A to 4E).

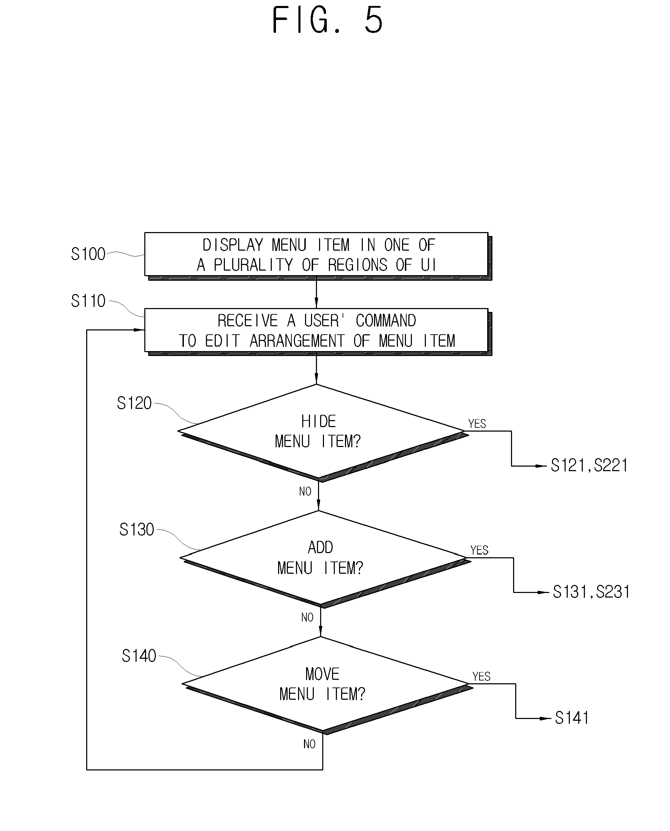

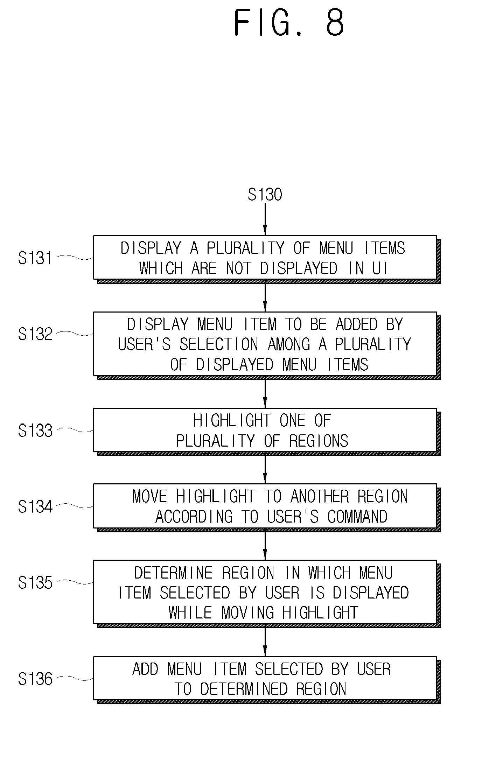

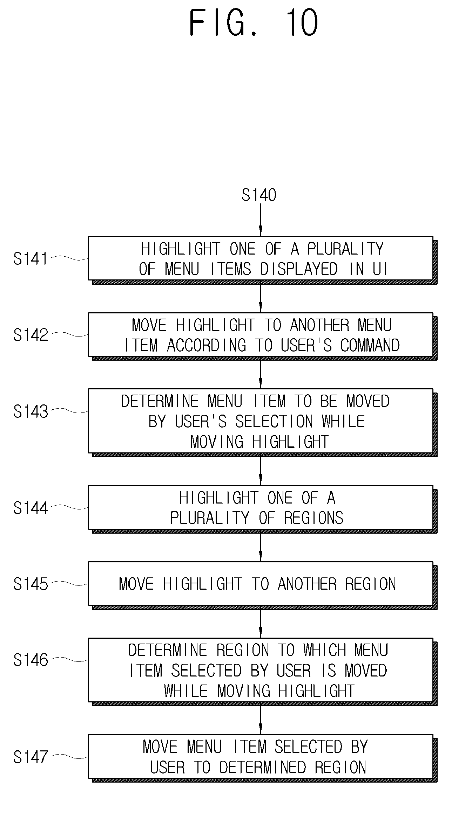

The operation of the display apparatus 100 will be described in detail with reference to Figures 4A to 10. Figures 4A to 4E illustrate the omission, addition and movement of the menu item 11 of the display apparatus 100. Figures 5 to 10 are flowcharts of operation of an embodiment of the display apparatus 100.

Referring to Figures 4A and 5, the controller 140 controls the UI generator 110 to display a plurality of menu items 21 in one of the plurality of regions 12 of the UI 20, according to a user's command (S100). Then, the controller 140 receives a user's input to edit the menu item 21a (S110). When a user's input comprises one of the omission, addition or movement of the menu items 21, the controller 140 performs the concerned operation (S120 to S140).

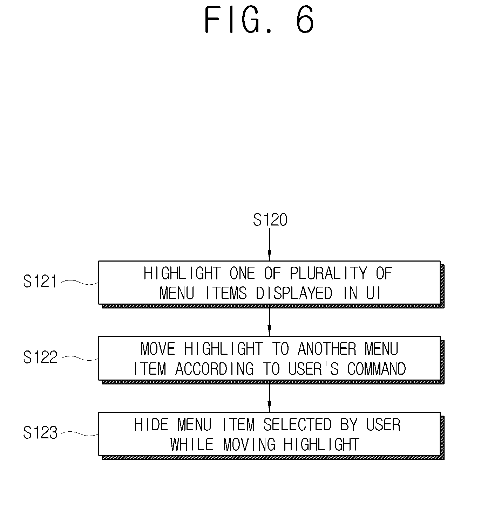

When a user's input comprises the omission of the menu item 21 (S120), as shown in Figure 6, the controller 140 controls the UI generator 110 to highlight one of the plurality of menu items 21a through 21n in the UI 20 (S121). For example, a menu item 21a of the UI 20 in Figure 4A is highlighted. The controller 140 controls the highlight of the menu item 21 a to move to another one of the menu items 21 according to a user's command (S122). In this case, a user's command may be input through the user input unit 130 comprising up/down/left/right buttons. The controller 140 controls the UI generator 110 to hide one of the menu items 21 selected by a user from the UI 20, while moving the highlight (S123). As shown in Figure 4E, a menu item 21b may be hidden from the UI 20.

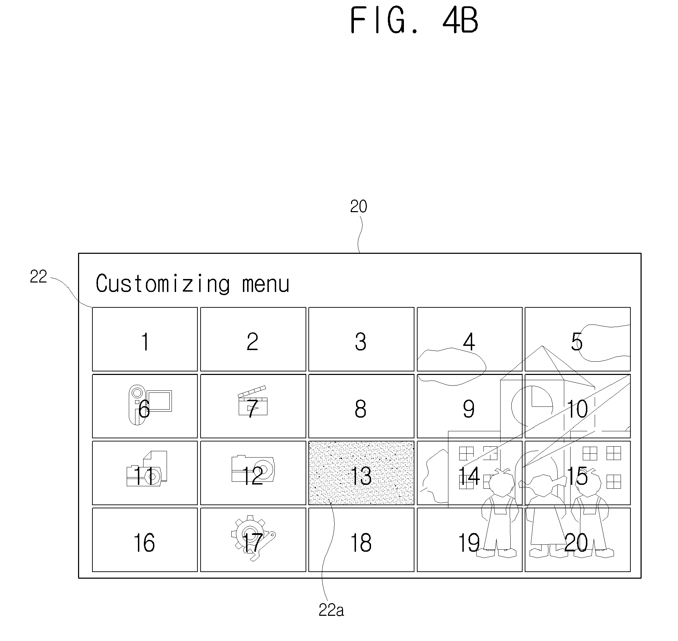

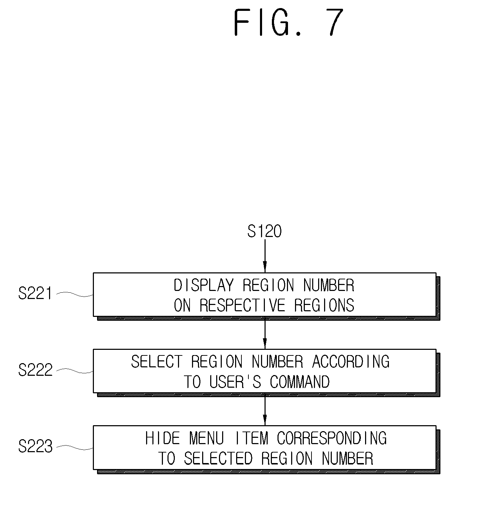

According to another embodiment, the controller 140 controls the UI generator 110 to display a region number on respective regions 22 in the UI 20 as shown in Figure 7 (S221). For example, the region number may be displayed on the respective regions 22 of the UI 20 as shown in Figure 4B. Then, the controller 140 receives the region number by a user's input (S222). The region number may be selected through the user input unit 130 comprising a number button. For example, a region number 13 may be input to the controller 140 as shown in Figure 4B. The controller 140 controls the UI generator 110 to hide the menu item 21 a (refer to Figure 4E) corresponding to the selected region number, from the UI 20 (S223).

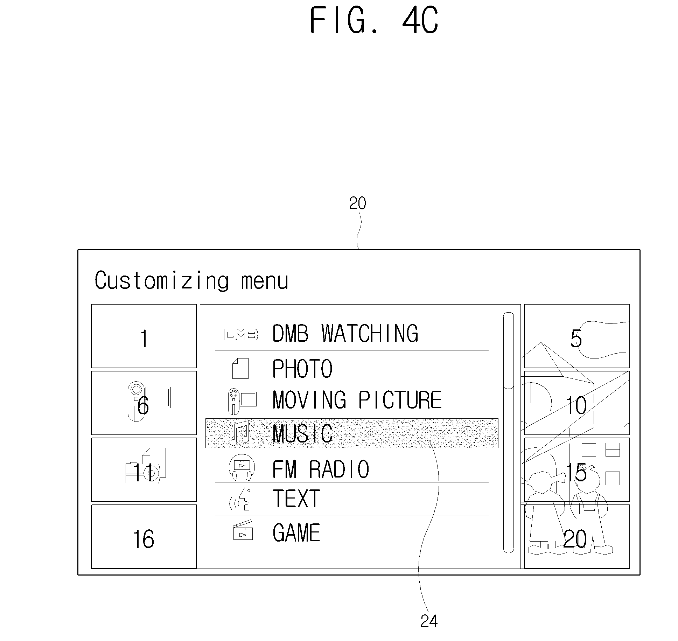

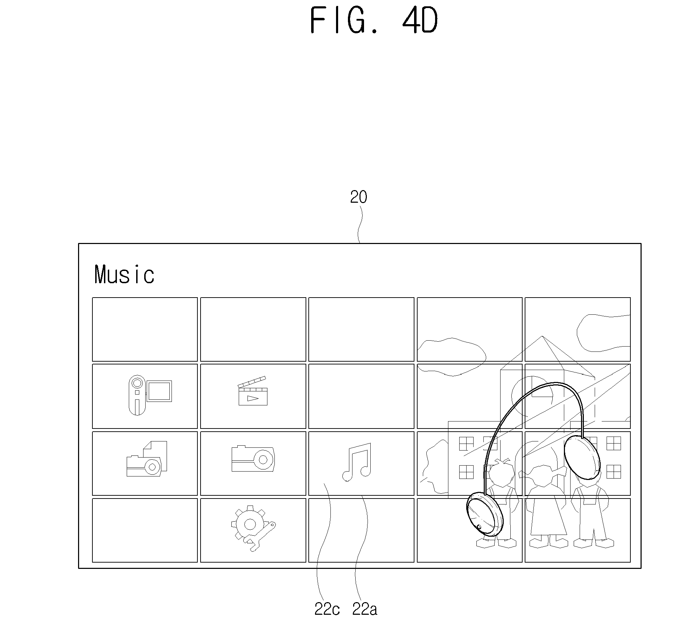

When a user's input comprises the addition of the menu item (S130), the controller 140 controls the UI generator 110 to display the plurality of menu items 24 which are included in the UI 20 (S131). As shown in Figure 4C, the plurality of menu items 24 which is not included in the UI 20 may be displayed as a text.

Then, the controller 140 determines the menu items 24 to be added according to a user's selection among the plurality of menu items 24 (S132). As shown in Figure 4C, the menu item 24 may be determined as a menu item to be added according to a user's selection while moving the highlight to the plurality of menu items 24. Figure 4C illustrates the selection of the menu item 24 corresponding to "music."

Then, the controller 140 highlights one of the plurality of regions 22 (S133), and moves the highlight to another region 22 according to a user's command (S134). While moving the highlight, the controller 140 determines a region 22 in which a menu item to be added by a user's selection is disposed (S135). As shown in Figure 4B, a highlighted region 22a may be selected by a user. The controller 140 controls the menu item selected by a user to be added to the region selected by a user (S136). As shown in Figure 4D, a menu item 22c corresponding to "music" may be added to the region 22a selected by a user. According to another embodiment, the operations of S133 to S135 may be performed earlier than the operations of S131 and S132.

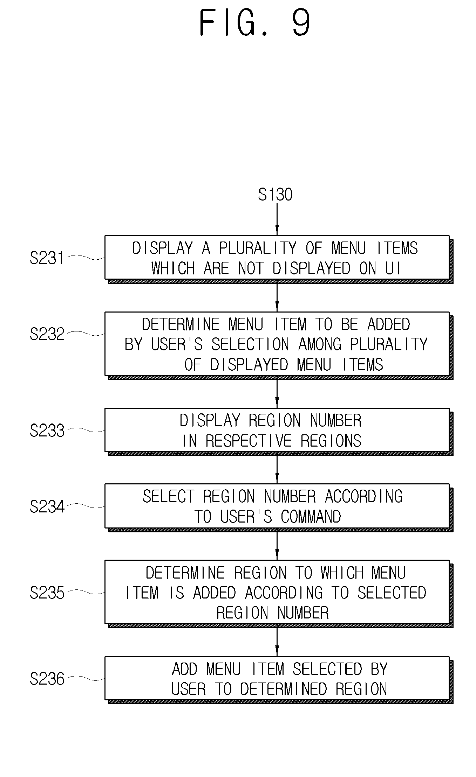

According to another embodiment, the controller 140 performs the operations of S231 and S232 as shown in Figure 9. The operations of S231 and S232 are identical or similar to the operations of S131 and S132. The controller 140 controls the region number to be displayed on the respective regions 22 of the UI 20 (S233). For example, the region number may be displayed on the regions 22 as shown in Figure 4B. Then, the controller 140 receives the region number by a user's input (S234), and determines the region 22 in which the added menu item 21 is disposed according to the selected region number (S235). The controller 140 controls the menu item selected by a user to be displayed on the region selected by a user (S236). According to another embodiment, the operations of S233 to S235 may be performed earlier than the operations of S231 and S232.

When a user's input comprises the movement of the menu item 21 (S140), the controller 140 highlights one of the plurality of menu items 21 in the UI 20 (S141), and moves the highlight to another one of the menu items 21 according to a user's command (S142). The controller 140 determines the menu item 21 to be moved according to a user's selection, while moving the highlight (S143). According to another embodiment, the operations of S141 to S143 may be replaced by the selection of the region number.

Then, the controller 140 highlights one of the plurality of regions 22 (S144), and moves the highlight to another region 22 according to a user's command (S145). The controller 140 determines the region 22 to which the menu item is moved by a user's selection, while moving the highlight (S146). According to another embodiment, the operations of S144 to S146 may be replaced by the selection of the region number. The controller 140 controls the menu item selected by a user to move to the region selected by a user (S147).

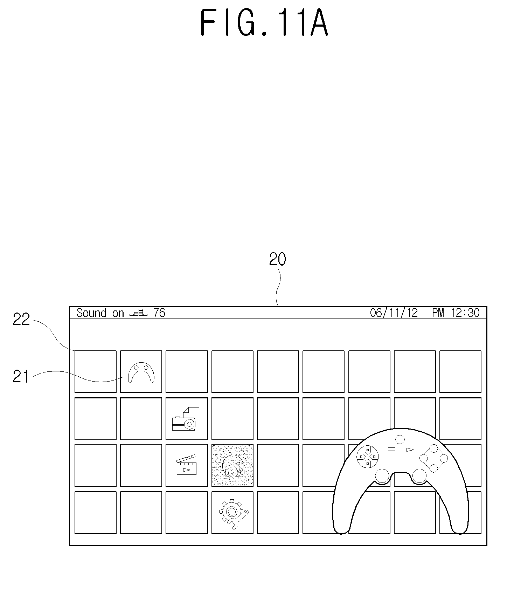

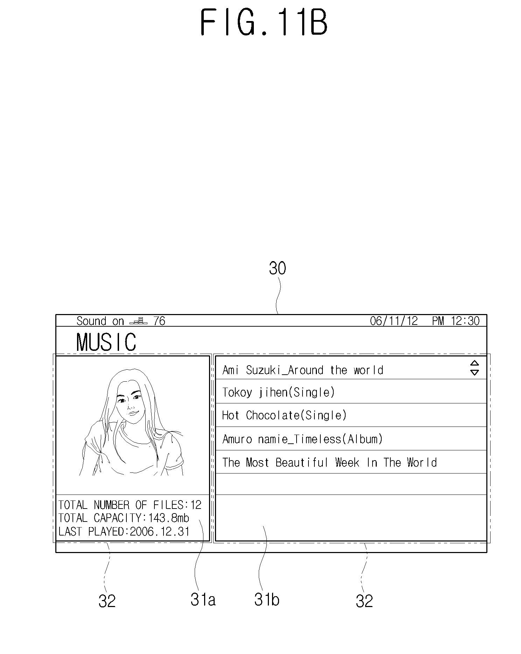

Figures 11A and 11B illustrate a display apparatus 100 according to another embodiment. Referring to Figures 11A and 11B, a UI generator 110 generates a sub UI 30 having a sub region 32 to dispose sub menu items 31a and 31b of a menu item 21 therein.

The sub region 32 of the sub UI 30 is larger than a region 22 of the UI 20. As shown in Figure 11B, the two sub menu items 31a and 31 b are respectively displayed in the sub region 32 which is formed by dividing the region 22 into two parts.

When a second sub menu item (not shown) of the sub menu items 31a and 31b exists, the second sub menu item may be displayed throughout the plurality of regions 22. Here, the menu item 21 is the highest menu since the menu item 21 is displayed on an elementary unit region 22. The second sub menu item is the lowest menu since the second sub menu item is displayed throughout the region 22.

Accordingly, when the menu item 21 is displayed, a user may acknowledge that there is not a more superior menu and may not perform unnecessary operations. When the sub menu items 31a and 31b are displayed, a user acknowledges that a superior or sub menu exists since the sub menu items 31a and 31b are displayed in neither the elementary unit region 22 nor the maximum unit region 22. Thus, a user moves to the superior or sub menu, thereby selecting the menu item without difficulty. When the second sub menu item is displayed, a user recognizes that there is no more sub menu, thereby preventing an unnecessary menu edit.

The controller 140 may be realized by a computer program. In this case, the controller 140 may comprise a read only memory (ROM) storing a computer program therein, a random access memory (RAM) loading the computer program and a microprocessor such as a central processing unit (CPU) operating the computer program.

When adding the menu item, a menu item may be added to a UI which does not have a menu item. The user input unit 130 and the display unit 120 may be realized as a touch screen. Here, a user may directly select the menu item to be hidden, added or moved, on the touch screen.

Meanwhile, the present invention may be realized as an image processing apparatus (not shown) such as a set-top box (not shown) of a TV to process a UI displayed in a TV Here, the image processing apparatus may be similar to a display apparatus 100 that excludes the display apparatus 120.

A user may add, hide or move a menu item according to a user's preference, thereby meeting a user' demand. For example, a user may hide or move the menu item which covers a background image, thereby viewing the background image.

A user may edit the menu item according to a user's preference, thereby selecting the menu item quickly and easily. For example, a user may hide a menu item which is not frequently used, thereby simplifying a procedure of selecting the menu item. Also, a user may set a frequently-used sub menu as a main menu, thereby selecting the sub menu quickly.

Further, a user may acknowledge a current stage in selecting menus, thereby selecting the menu item conveniently.

Although a few exemplary embodiments of the present invention have been shown and described, it will be appreciated by those skilled in the art that changes may be made in these exemplary embodiments without departing from the principles of the invention, the scope of which is defined in the appended claims.

## Claims

1. Apparatus comprising:
a user interface (UI) generator for generating a UI having a plurality of regions occupied by an arrangement of one or more selectable menu items;
means for receiving a command to edit the UI; and
a controller for controlling the UI generator to edit the arrangement of the menu items according to the command.

2. Apparatus according to claim 1, wherein the regions are arranged as a grid.

3. Apparatus according to claim 1 or claim 2, wherein the controller is arranged to control the UI generator to hide a menu item of the menu items selected by a user.

4. Apparatus according to any preceding claim, wherein the controller is arranged to control the UI generator to highlight a menu item selected by a user for hiding.

5. Apparatus according to any preceding claim, wherein the controller is arranged to control the UI generator to display region numbers on the regions, and to controls the UI generator to hide a menu item corresponding to a region number selected by the user.

6. Apparatus according to any preceding claim, wherein the controller is arranged to control the UI generator to add at least one menu item selected by a user.

7. Apparatus according to claim 6, wherein the controller is arranged to control the UI generator to display in a selectable manner a second plurality of menu items which are different to the first plurality of menu items.

8. Apparatus according to claim 7, wherein the controller is arranged to control the UI generator to highlight a region to which a selected menu item can be added.

9. Apparatus according to claim 7 or claim 8, wherein the controller is arranged to control the UI generator to display region numbers on the regions, and to control the UI generator to add the selected menu item to a region corresponding to a region number selected by the user.

10. Apparatus according to any preceding claim, wherein the controller is arranged to control the UI generator to move a menu item selected by a user to a region selected by the user.

11. Apparatus according to claim 10, wherein the controller is arranged to control the UI generator to highlight one or more menu items to be moved.

12. Apparatus according to claim 10 or claim 11, wherein the controller is arranged to control the UI generator to display region numbers on the regions, and to move a menu item corresponding to a region number selected by the user.

13. Apparatus according to any of claims 10 to 12, wherein the controller is arranged to control the UI generator to highlight one or more regions to which the menu item can be moved.

14. Apparatus according to any of claims 10 to 13, wherein the controller is arranged to control the UI generator to display region numbers on the regions, and to control the UI generator to move a selected menu item to a region corresponding to a region number selected by a user.

15. Apparatus according to claim 1, wherein the UI generator is arranged to generate a sub UI comprising at least one sub region in which at least one sub menu item of the menu items is displayed, and the at least one sub region is larger than the regions of the UI.

16. Apparatus according to any preceding claim, including a display.

17. Apparatus according to claim 16, wherein the display comprises a touch screen which also constitutes the means for receiving.

18. Apparatus according to any of claims 1 to 15, comprising an output to an external display.

19. A method comprising:
generating a user interface (UI) which comprises a plurality of regions in which is provided an arrangement of at least one selectable menu items ;
receiving a command to edit the arrangement of menu items; and
editing the arrangement of the menu items of the UI according to the command.
